# EUROPEAN PATENT SPECIFICATION

(11) **EP 1 864 711 B1**
(45) Date of publication and mention of the grant of the patent: **04.09.2013**
(21) Application number: 06711919.8
(22) Date of filing: 18.01.2006
(51) Int. Cl.: B01J 19/08

(54) **BIOINVASIVE REACTION REDUCING METHOD**
VERFAHREN ZUR VERRINGERUNG DER BIOINVASIVEN REAKTION
PROCEDE DE REDUCTION PAR REACTION BIOINVASIVE

(30) Priority: 28.03.2005 JP 2005092955; 12.12.2005 JP 2005358096
(43) Date of publication of application: 12.12.2007
(60) Divisional application: 11004207.4
(73) Proprietor: DAIKIN INDUSTRIES, LTD., Osaka-shi, Osaka 530-8323 (JP)
(72) Inventor: ARAI, Jun-ichiro, c/o DAIKIN INDUSTRIES LTD, Kusatsu-shi, Shiga 525-8526 (JP); OZAWA, Satoshi, Ibaraki 305-0821 (JP); OKAMOTO, Yoshio, c/o DAIKIN INDUSTRIES LTD, Sakai-shi, Osaka 591-8511 (JP); KAGAWA, Kenkichi, c/o DAIKIN INDUSTRIES LTD, Sakai-shi, Osaka 591-8511 (JP); NAKADA, Satoki, Chiba 270-0152 (JP)
(74) Representative: Goddar, Heinz J.
(86) International application number: PCT/JP2006/300650
(87) International publication number: WO 2006/103817

(56) References cited:
- WO-A1-01/95998
- JP-A- 2004 089 260
- JP-A- 2004 190 528
- JP-A- 2004 225 983
- JP-A- 2005 021 319
- US-B1- 6 455 014

## Description

The present invention relates to a bioinvasive reaction reducing method to reduce bioinvasive reaction in a substance.

### BACKGROUND TECHNOLOGY

In recent years, the increase in the number of hay fever sufferers afflicted by cedar pollen has become a problem, and it has been reported that the increase in the number of hay fever sufferers afflicted by cedar pollen and the increase in the number of cars in which a diesel engine is mounted have a positive correlation. Particulate components of exhaust gas discharged from diesel engines are referred to as diesel exhaust particulates (DEP). Meanwhile, suspended particulates in the air having a diameter of 10 m and smaller are referred to as suspended particulate matters (SPM).

It has been reported from animal experiments using DEPs that production of IgE antibodies significantly increases when mice are sensitized to DEPs together with cedar pollen (see for example Non-Patent Document 1). Thus, the adjuvant effects of DEPs have been proven, and furthermore, it has been proven that SPM also has adjuvant effects.

The adjuvant effects of adjuvant substances are described below.

A "phenomenon where production of antibodies increases" when a substance is administered together with an antigen is referred to as "adjuvant effects." As for the mechanism of adjuvant effects, it is said that adjuvant substances disrupt the balance between Th1 and Th2 within the body so that Th2 dominates. In the following, a possible mechanism for adjuvant effects is described.

Defensive reaction within a body is roughly categorized into two systems, and helper T cells (Th) which are in charge of these respective systems include type 1 (Th1) and type 2 (Th2). Th1 and Th2 are both specialized from Th0 (naive helper T cells) in such a manner that Th1 helps cell mediated immunity and Th2 helps humoral immunity.

Whether Th1 of Th2 acts in response to a certain stimulus depends on the constitution of the person (genetics), and the environment in which he or she grew up (type of antigens to which he/she has been exposed in the past). It is believed that in areas in which the environment is not very good in terms of hygiene, there are many people who suffer from infectious diseases, and therefore, Th1 dominates, while in areas in which the environment is good in terms of hygiene, there are less opportunities for infection, and therefore,' Th2 tends to dominate. As a result, allergy symptoms tend to appear in developed countries, and this is considered to be one of the reasons why there are many hay fever sufferers in cities.

Whether Th0 becomes specialized to Th1 or Th2 is determined by what type of cytokine environment is created in the body through immune response at the time of initial stimulus by antigens. Adjuvant substances tend to create a cytokine environment which makes it easy for Th0 to become specialized to Th2 at the time of stimulus by antigens, and in particular, it is believed that the production of IL-4 (interleukin 4), which is a cytokine essential for specialization to Th2, is accelerated.

Meanwhile, air cleaning apparatuses which can remove dust such as pollen have been developed (see for example Patent Document 1). These apparatuses can remove antigens such as pollen which cause allergies, and thus, can prevent allergy.

In addition, as for particulate matter (PM), it is known that the smaller the particulates are, the greater the toxicity is. If particulate matter (PM) is categorized into coarse particulates (diameter exceeding 2.5 m), fine particulates (diameter in a range from 0.1 µm to 2.5 m) and ultrafine particulates (diameter of less than 0.1 µm), for example, it has been reported that ultrafine particulates (diameter of less than 0.1 µm) are most dangerous (see for example Non-Patent Document 2).

Incidentally, nanotechnology has been drawing attention in recent years, and there is a possibility that the production of nanoparticulates will dramatically increase. In addition, even if nanoparticulates are not intentionally produced, such nanoparticulates as the above described DEPs exist in the environment. It is expected that the production of nanoparticulates will increase with the use of nanotechnology, and it is expected that as a result, the possibility for exposure to nanoparticulates will increase. Meanwhile, there have been various reports relating to the toxicity of nanoparticulates. That is to say, it has been reported that nanoparticulates have a fine structure on a nanoscale (nanostructure), despite being a substance species, and thus, have toxicity.

The smaller the particulate diameter of nanoparticulates having the same mass is, the greater the surface area becomes, which is a reason why nanoparticulates have toxicity (see for example Non-Patent Document 3). The following are the relationship between the size of the surface area and the degree of toxicity: the properties and conditions on the surface of particulates relate to the toxicity, and when the particulate diameter is small and the surface area is large, the surface of particulates adsorbs a large amount of poisonous chemicals. In addition, it has been suggested that the toxicity of chemicals in small particulates may be stronger than the toxicity of large particulates. In addition, it has also been suggested that particulates of a certain size and smaller may have greatly different chemical properties and conditions. In addition, it has also been suggested that the behavior of particulates within the body may differ depending on the size of the particulates. For example, it has been reported that a large amount of nanoparticulates settle in the lungs, and the amount of nanoparticulates which settle depends on the size of the particulates (see for example Non-Patent Document 4). In addition, in the case where nanoparticulates are inhaled, it has been suggested that the amount of particulates which remain in the lung tissue may increase, the amount of particulates which move on to lymph nodes may increase, and the nanoparticulates may pass through the lungs and affect the whole body. In addition, it has also been suggested that the reaction of organisms to smaller nanoparticulates may be different from that to larger nanoparticulates.

Furthermore, it has been reported that the smaller the size of particulates, the more significant the adjuvant effects of the particulate matter (see for example Non-Patent Document 5). This document shows that nanoparticulates can worsen antigen-related inflammation of the respiratory tract and increase the production of immunoglobulin, and the effects are more severe with smaller particulates. Concretely, inflammation of the respiratory tract and production of immunoglobulin were examined when mice were administered with only OVA (egg white albumin), only nanoparticulates, or OVA and nanoparticulates. CB (carbon black) was used as the nanoparticulates, and CB having a diameter of 14 nm and CB having a diameter of 56 nm was used. In the results of the research, it was reported that the inflammation was worse and the production of immunoglobulin higher in the case of nanoparticulates having a diameter of 14 nm than in the case of nanoparticulates having a diameter of 56 nm as a general tendency. It was reported concerning the production of immunoglobulin that the level of the total IgE, antigen-specific IgG1, and antigen-specific IgE was significantly high in the case where OVA and nanoparticulates having a diameter of 14 nm were administered, in comparison with the case where only OVA or only nanoparticulates were administered. The level of the total IgE, antigen-specific IgG1 and antigen-specific IgE in the case where OVA and nanoparticulates were administered was significantly higher when the diameter was 14 nm than when the diameter was 56 nm, as compared to the case where only OVA or only nanoparticulates were administered.
Non-Patent Document 1: Hiroshi MORITA, Toshikazu NAGAKURA, Yoshiki MIYACHI, Yoshitaka OKAMOTO, Editors, "Allergy Navigator," First Edition, Medical Review Co., Ltd., May 15th, 2001, pp. 132-133
Non-Patent Document 2: André Nel, "Air Pollution-Related Illness: Effects of Particles," Science, 2005, Vol. 308, pp. 804-806
Non-Patent Document 3: Brown DM, Wilson MR., MacNee W, Stone V, Donaldson K, "Size-dependent proinflammatory effects of ultrafine polystyrene particles: a role for surface area and oxidative stress in the enhanced activity of ultrafines," Toxicol Appl. Pharmacol., 2001, Vol. 175, No. 3, pp. 191-199
Non-Patent Document 4: Cassee Fr, Muijser H, Duistermaat E, Freijer JJ, Geerse KB, Marijnissen JC, Arts JH., "Particle size-dependent total mass deposition in lungs determines inhalation toxicity of cadmium chloride aerosols in rats. Application of multiple path dosimetry model," Arch Toxicol., 2002, vol. 76, Nos 5 and 6, pp. 277-286
Non-Patent Document 5: Kenichiro INOUE, Hirohisa TAKANO, Rie YANAGISAWA, Miho SAKURAI, Takamichi ICHINOSE, Kaori SADAKANE, and Toshikazu YOSHIKAWA, "Effects of nano particles on antigen-related airway inflammation in mice," Respiratory Research, 2005, Vol. 6, No. 1, pp. 106-117
Patent Document 1: Japanese Laid-Open Patent Publication No. 2001-349595 (pp. 2-6)
Reference is further made to US 6 455 014 B1 and WO 01/95998.

### DISCLOSURE O THE INVENTION

However, allergies, such as hay fever, are worsened by adjuvant substances, and therefore, even in the case where allergens, such as pollen, decompose so that allergens in the air are reduced, allergies sometimes worsen, due to the presence of adjuvant substances. Therefore, it is believed that allergies can be prevented more effectively by inactivating adjuvant substances in the air and reducing allergens than by solely reducing allergens. However, there is no material that discloses a method for preventing allergies by inactivating adjuvant substances in the air.

In addition, as described above, it has been reported that substances having a nanostructure may cause various bioinvasive reactions, and no effective method for reducing the bioinvasive reaction of substances having such a nanostructure or device for this have been reported.

An objective of the present invention is to provide a bioinvasive reaction reducing method for reducing the bioinvasive reaction of substances having a nanostructure, a substance modifying device for eliminating the nanostructure of substances in order to reduce bioinvasive reaction of the substances, and an air conditioner provided with the substance modifying device.

In, order to achieve the above described objective, according to one aspect of the present invention, a substance having a nanostructure is made to contact an active species generated through plasma discharge and diffused from between positive and negative electrodes for the above described plasma discharge, and thus, the nanostructure of the above described substance is eliminated, so that the bioinvasive reaction of the above described substance is reduced.

In the above described configuration, a substance having a nanostructure is made to contact an active species generated through plasma discharge and diffused from between positive and negative electrodes for the plasma discharge, and thus, the nanostructure of the substance is eliminated, so that the bioinvasive reaction of the substance can be reduced. A "substance having a nanostructure" is a substance having a fine structure on a nanoscale (nanostructure), and includes substances having a fine structure on a nanoscale (nanostructure) on the surface of the substance, in addition to fine substances on a nanoscale. "Nanostructure" is a fine structure on a nanoscale and includes fine structures on a nanoscale which form unevenness on the surface of the substance. A "nanostructure is eliminated" means that the unevenness formed by the nanostructure is reduced in the fine structure on a nanoscale in the substance having a nanostructure.

The above described substance may be an adjuvant substance, and the adjuvant substance may be made to contact an active species which is generated through plasma discharge and is diffused from between positive and negative electrodes for plasma discharge, and thus, the nanostructure of the adjuvant substance can be eliminated and inactivated so that the bioinvasive reaction of the adjuvant substance can be reduced. In this case, the adjuvant substance is inactivated in this manner, and thus, the adjuvant effects can be suppressed and allergies can be prevented.

The above described plasma discharge can be streamer discharge generated between a positive electrode in linear or needle form and a negative electrode in plane form. In this case, the nanostructure of the substance can be eliminated effectively with an active species generated through streamer discharge, and thus, the bioinvasive reaction of the substance can be reduced.

The substance having a nanostructure can be made to contact a secondary active species which is excited by an active species having an electron temperature of 10 eV or higher generated through the above described plasma discharge. In this case, the secondary active species which is excited by an active species having an electron temperature of 10 eV or higher generated through plasma discharge is made to contact the substance having a nanostructure, and thus, the nanostructure of the substance can be effectively eliminated. As a result, the bioinvasive reaction of the substance can be reduced more effectively.

According to another aspect of the present invention, a substance modifying device for modifying a substance is provided with plasma discharging means for discharging plasma and makes a substance having a nanostructure contact an active species which is generated through plasma discharge using the above described plasma discharging means and is diffused from between the positive and negative electrodes of the above described plasma discharging means, and thus, eliminates the nanostructure of the above described substance.

In the above described configuration, the substance modifying device provided with plasma discharging means for discharging plasma makes a substance having a nanostructure contact an active species which is generated through plasma discharge using the above described plasma discharging means and is diffused from between the positive and negative electrodes of the plasma discharging means, and thus, eliminates the nanostructure of substances. The nanostructure of substances is eliminated in this manner, and thus, the bioinvasive reaction of substances can be reduced.

The above described substance may be an adjuvant substance, and the adjuvant substance may be made to contact an active species which is generated through plasma discharge using the plasma discharging means of the above described substance modifying device and is diffused from between positive and negative electrodes for plasma discharge, and thus, the nanostructure of the adjuvant substance can be eliminated and inactivated. In this case, the adjuvant substance is inactivated in this manner, and thus, the adjuvant effects can be suppressed and allergies can be prevented.

The above described plasma discharging means may be provided with a positive electrode in linear or needle form and a negative electrode in plane form, so that the above described plasma discharge may be streamer discharge generated between the above described positive electrode and the above described negative electrode. In this case, the nanostructure of the substance can be eliminated effectively with an active species generated through streamer discharge, and thus, the bioinvasive reaction of the substance can be reduced.

The substance having a nanostructure can be made to contact a secondary active species which is excited by an active species having an electron temperature of 10 eV or higher generated through the above described plasma discharge. In this case, the secondary active species which is excited by an active species having an electron temperature of 10 eV or higher generated through plasma discharge is made to contact the substance having a nanostructure, and thus, the nanostructure of the substance can be effectively eliminated. As a result, the bioinvasive reaction of the substance can be reduced more effectively.

The above described substance modifying device may further be provided with allergen removing means for removing allergens. In this case, allergens can be removed. The substance modifying device inactivates adjuvant substances and removes allergens, and thus, can effectively prevent allergies.

The above described substance modifying device may further be provided with air blowing means, so that the above described air blowing means helps the active species to be diffused. In this case, the air blowing means helps the active species to be diffused, and thus, can effectively increase opportunities for the active species and the substance contact each other. As a result, modification of the substance is faster even in locations at a distance from the plasma discharging portion, and substances which are captured by a filter located downstream can be modified without fail before flying off again.

According to another aspect of the present invention, an air conditioner may be provided with a substance modifying device as that described above.

### BRIEF DESCRIPTION OF THE DRAWINGS

Fig. 1 is a cross-sectional view schematically showing the configuration of a discharging device in a substance modifying device according to one embodiment of the present invention;
Fig. 2 is a diagram illustrating an experimental apparatus used in Example 1;
Fig. 3 is a graph showing the experiment results for Example 1;
Fig. 4 is a graph showing the experiment results for Example 2;
Fig. 5 is a scanning electron micrograph of unprocessed diesel exhaust particulates (DEP);
Fig. 6 is a scanning electron micrograph of streamer processed diesel exhaust particulates (DEP); and
Fig. 7 is a scanning electron micrograph of diesel exhaust particulates (DEP) in the case where streamer discharge is carried out on the particulates placed on the surface of the opposite electrode on the discharging electrode.

### BEST MODE FOR CARRYING OUT THE INVENTION

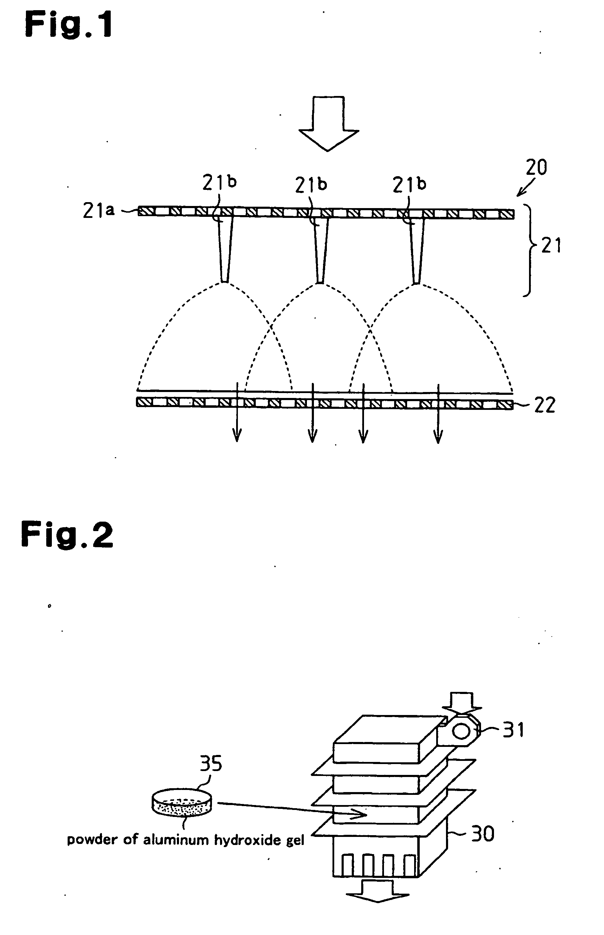

In the following, one embodiment of the present invention is described in reference to Fig. 1. In the present embodiment, a bioinvasive reaction reducing method for reducing the bioinvasive reaction of substances having a nanostructure, and a substance modifying device for eliminating the nanostructure of substances in order to reduce the organic infestation reaction of substances having a nanostructure are described. Hereinafter, "bioinvasive reaction" includes bioinvasive reaction to organisms of any type, not only animals but also including plants.

As described above, substances having a nanostructure (fine structure on nanoscale) have a fine structure on a nanoscale, and therefore, cause bioinvasive reactions. In addition, as described above, the finer the nanostructure, the more severe the bioinvasive reactions.

Substance having a nanostructure (fine structure on nanoscale) include adjuvant substances, such as diesel exhaust particulates (DEP). Adjuvant substances modify immune reactions to antigens and reinforce the production of IgE antibodies. Accordingly, allergies, such as hay fever, are also intensified by adjuvant substances.

As described above, adjuvant substances easily create a cytokine environment in which Th0 tends to become specialized to Th2 when the antigen is stimulated, and are believed to accelerate particularly production of IL-4 (interleukin 4), which is a cytokine essential for specialization to Th2.

An effective source of production for IL-4 is a certain type of T-cell referred to as NK1.1+T cells. In addition, it is believed that adjuvant substances activate these NK1.1+T cells and produce IL-4. Though the mechanism through which adjuvant substances activate NK1.1+T cells is currently unclear, it is believed that NK1.1+T cells can be prevented from being activated by adjuvant substances by inactivating the portion of adjuvant substances which activates NK1.1+T cells.

### <Elimination of Nanostructure through Plasma Discharge>

The present invention is characterized in that the bioinvasive reaction of substances having a nanostructure is reduced by eliminating the nanostructure of the substance with an active species generated through plasma discharge. That is to say, an active species having high reactivity (high-speed electrons, ions, radicals or other excited molecules) is generated through plasma discharge and substances having a nanostructure are made to contact the above described active species in the air, and thus, the fine structure of substances on a nanoscale (nanostructure) is eliminated. In addition, bioinvasive reaction caused by fine structures on a nanoscale is reduced by eliminating the nanostructure. For example, an adjuvant substance is made to contact the above described active species in the air, and thus, the adjuvant substance is inactivated, by eliminating the nanostructure, and thus, the adjuvant effects are suppressed. In order to effectively eliminate the nanostructure of substances, active species that is diffused from between the positive and negative electrodes for plasma discharge contact substances having a nanostructure in the configuration.

It is preferable for the above described active species to be effectively generated in order to eliminate the nanostructure of substances so that bioinvasive reaction of substances having a nanostructure can be reduced (for example in order to inactivate adjuvant substances). For the plasma discharge, it is possible to use streamer discharge, which is discharge between a positive electrode in linear or needle form and a negative electrode in plane form where discharge occurs stably between a certain point on the positive electrode and a number of points on the negative electrode approximately simultaneously.

In addition, in order to eliminate the nanostructure of substances so that the bioinvasive reaction of substances having a nanostructure is reduced (for example in order to inactivate adjuvant substances), it is preferable for an active species generated through the above described plasma discharge to include an active species having an electron temperature of no lower than 10 eV, such as high-speed electrons. When excited by an active species having an electron temperature of 10 eV or higher, such as high-speed electrons generated through plasma discharge, a secondary active species, such as excited nitrogen molecules, is further generated. In order to eliminate the nanostructure, it is preferable to use mainly a secondary active species generated in this manner in the configuration. That is to say, in order to eliminate the nanostructure, it is preferable to make substances having a nanostructure contact a secondary active species which is excited by an active species having high energy, such as high-speed electrons, instead of making substances having a nanostructure make contact directly with an active species having high energy, such as high-speed electrons. It is believed that in the case where a substance having a nanostructure is directly subjected to streamer discharge in a plasma discharge portion, the nanostructure is not eliminated even though change can be observed in the form of the substance due to the high concentration of an active species having high energy and strong reaction, while in locations at a distance from the discharge portion, the active species has high energy but the concentration is low, and the oxidation and decomposition reaction is milder and progresses less than in the discharge portion, and thus, only the nanostructure is eliminated.

In addition, a large amount of high-speed electrons having high energy are generated through streamer discharge, and therefore, a large amount of a secondary active species having high energy, such as excited nitrogen molecules, can be generated, and thus, sufficient effects are gained in locations at a certain distance from the plasma discharge portion. In order to make a substance having a nanostructure contact a secondary active species generated in this manner, the secondary active species is diffused from between the positive and negative electrodes for plasma discharge before contacting the substance having a nanostructure in the configuration.

In the following, the configuration of a substance modifying device where the nanostructure of substances is eliminated in order to reduce the bioinvasive reaction of substances having a nanostructure through streamer discharge is described. Any type of plasma discharge may be employed as long as the above described active species can be effectively generated in order to eliminate the nanostructure, and the plasma discharge according to the present invention is not limited to streamer discharge.

### <Configuration of Substance Modifying Device according to Present Embodiment>

The substance modifying device according to the present embodiment is provided with a main casing body in box form, and an air intake opening for introducing a gas to be processed and an air discharge opening through which the gas to be processed flows out are created in this main casing body. Furthermore, a fan for circulating the gas to be processed, a circulation path for the above described gas to be processed, and a discharge device 20, which is means for plasma discharge, are provided in the above described main casing body.

Next, the above described discharge device 20 is described in detail.

Fig. 1 is a cross-sectional view schematically showing the configuration of a discharge device 20 in the substance modifying device according to the present embodiment.

This discharge device 20 is provided with a discharge electrode 21 for generating low temperature plasma and an opposite electrode 22. The discharge electrode 21 is formed of a discharge substrate 21a and a number of discharge ends 21b (positive electrodes) which are fixed to this discharge substrate 21a in such a manner as to be approximately perpendicular to this discharge substrate 21a. the discharge substrate 21a has a great number of openings through which air passes in the direction perpendicular to the surface. In the present embodiment, the discharge ends 21b are in needle form. The discharge ends 21b may be in linear form, or the discharge ends 21b in linear or needle form may be in thin plate form. The opposite electrode 22 (negative electrode), which faces the discharge ends 21b of the above described discharge electrode 21, is in plate form (plane form) and has a great number of openings through which air passes in the direction perpendicular to the surface. The discharge electrode 21 is arranged so that the discharge substrate 21a is approximately parallel to the opposite electrode 22 and the discharge ends 21b are approximately perpendicular to the opposite electrode 22.

In addition, the discharge device is provided with a power supply means for applying a discharge voltage across the above described discharge electrode 21 and opposite electrode 22. Streamer discharge generated between the discharge electrode 21 and the opposite electrode 22 through application of a discharge voltage generates low temperature plasma in the field of discharge. The low temperature plasma generates high-speed electrons, ions, ozone, radicals, for example hydroxy radicals, and other excited molecules (excited oxygen molecules, excited nitrogen molecules, excited water molecules and the like).

Next, the mechanism for streamer discharge is described. The movement concept of electrons and charged particulates (plus ions) in streamer discharge is described.

At the time of streamer discharge, a minute arc, referred to as leader, is generated from the discharge electrode 21 toward the opposite electrode 22. In the end portion of the leader, air is ionized into electrons and charged particulates due to the steep inclination of the potential. Thus, when charged particulates reach the opposite electrode 22, one discharge is completed.

At this time, the electrons generated through ionization move toward the discharge electrode 21 and the discharged particulates move to the opposite electrode 22 (A). The above described charged particulates generated through ionization have a relatively large mass in comparison with the above described electrons, and therefore, the speed of movement of the charge particulates is slower than that of the electrons. Accordingly, for each discharge, the charged particulates temporarily remain between the two electrodes 21 and 22 (B). Then, when all of these remaining charged particulates reach the opposite electrode 22, the state between the two electrodes 21 and 22 returns to the original electrical field and discharge starts again (C). At the time of streamer discharge, this cycle (A) → (B) → (C) is repeated so that a current flows in pulses through streamer discharge, as a result of the intermittent movement of the charged particulates generated in the cycle.

### <Operation>

Next, the operation of this substance modifying device is described.

When the substance modifying device is energized, the fan is started up, so that air (gas to be processed) is drawn through the air intake opening and led into the circulation path.

Then, the gas to be processed, which is led to the circulation path, is introduced into the discharge device 20. Low temperature plasma is generated through streamer discharge between the discharge electrode 21 and the opposite electrode 22 in the discharge device 20, and an active species having high reactivity is generated due to the above described low temperature plasma (high-speed electrons, ions, radicals or other excited molecules). In addition, a secondary active species is generated through excitation by means of the active species having high energy, for example high-speed electrons. The active species generated through streamer discharge is diffused from between the discharge electrode 21 and the opposite electrode 22, downstream from the discharge device 20. In particular, the active species having high energy, for example high-speed electrons, allow the generated secondary active species to be diffused from between the discharge electrode 21 and the opposite electrode 22 downstream from the discharge device 20. Meanwhile, the gas to be processed passes through the area where low temperature plasma is generated (discharge point) so that substances having a nanostructure in the gas to be processed contact the active species that is generated through streamer discharge and is diffused from between the discharge electrode 21 and the opposite electrode 22 in the vicinity of the discharge device 20 on the downstream side in the air. In particular, in the case of an active species having high energy, such as high-speed electrons generated in the discharge device 20, direct contact is not made by this active species having high energy, but by the generated secondary active species. As a result, the nanostructure is eliminated and the bioinvasive reaction of the substance having a nanostructure is reduced.

When adjuvant substances in the gas to be processed, for example, contact the above described active species in the air, the nanostructure is eliminated and the adjuvant substances inactivated. As a result, the adjuvant effects of the adjuvant substances are reduced. Thus, in the case where adjuvant substances are included in the introduced air (gas to be processed), the substance modifying device eliminates the nanostructure of the adjuvant substances, so that the adjuvant substances are inactivated and the bioinvasive reaction of the adjuvant substances is reduced, and thus, functions as an allergy preventing apparatus.

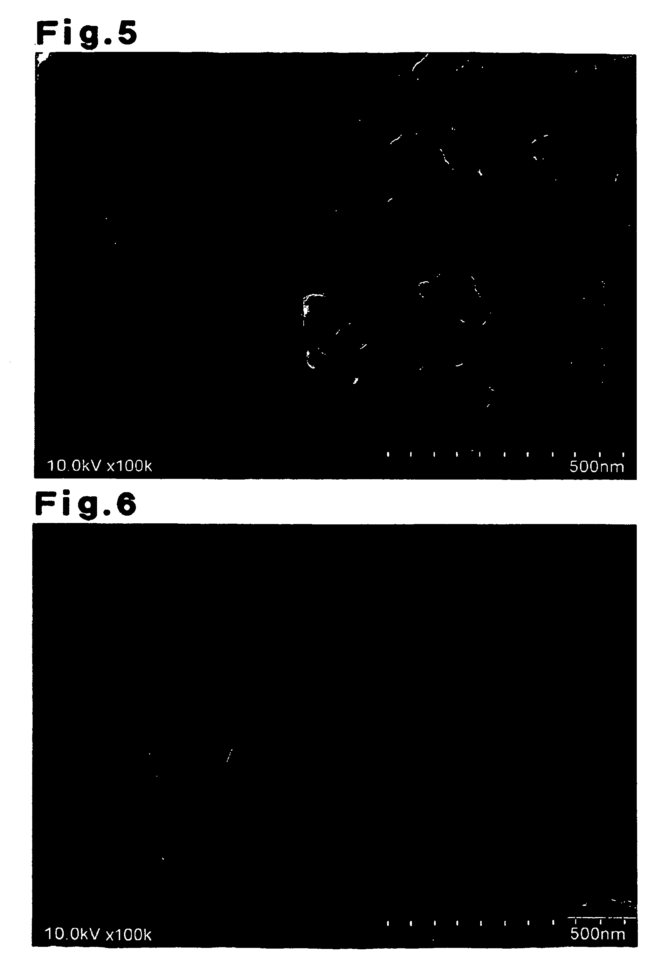

The fine structure on a nanoscale described below and shown in Fig. 5 (unprocessed DEPs) is broken down, as shown in Fig. 6 (DEPs after streamer processing (nanostructure eliminated)). Thus, the above described substance modifying device uses an active species generated through streamer discharge so that fine structures on a nanoscale in substances are broken down, and thus, fine structures on a nanoscale are eliminated.

The gas to be processed that has been cleaned through the above described processing is discharged through the air discharge opening in the main casing body.

The present embodiment has the following advantages.

In the above described embodiment, substances having a nanostructure are made to contact an active species which is generated through plasma discharge and is diffused from between the positive and negative electrodes for plasma discharge, and thus, the nanostructure of the substances is eliminated and the bioinvasive reaction of substances is reduced. As a result, bioinvasive reaction due to the nanostructure of substances can be reduced. Thus, the nanostructure of substances is eliminated using an active species generated through plasma discharge, and the bioinvasive reaction of substances having a nanostructure can be reduced.

In the above described embodiment, adjuvant substances are inactivated using an active species generated through plasma discharge. Therefore, allergies can be prevented, by inactivating adjuvant substances. That is to say, adjuvant substances are made to contact an active species which is generated through plasma discharge and is diffused from between the positive and negative electrodes for plasma discharge, and thus, the nanostructure of the adjuvant substances is eliminated, so that the adjuvant substances can be inactivated. As a result, adjuvant effects can be reduced and allergies can be prevented.

In the above described embodiment, the discharge device in the substance modifying device is provided with a positive electrode in linear or needle form (discharge ends 21b of discharge electrode 21) and a negative electrode in plane form (opposite electrode 22). In addition, the nanostructure of substances is eliminated using an active species generated through streamer discharge where discharge between the positive electrode (discharge ends 21b) and the negative electrode (opposite electrode 22), which is discharge between certain points of the positive electrode (discharge ends 21b) and a number of points on the negative electrode (opposite electrode 22), occurs stably and approximately simultaneously. Thus, the nanostructure of substances can be eliminated effectively using an active species generated through streamer discharge, and the bioinvasive reaction of the substances can be more effectively reduced. For example; the nanostructure of adjuvant substances is eliminated using an active species generated through streamer discharge so that the adjuvant substances are inactivated, and thus, adjuvant effects can be reduced. Thus, adjuvant substances are inactivated using an active species generated through streamer discharge so that allergies can be prevented.

In the above described embodiment, active species generated through plasma discharge includes active species having an electron temperature of 10 eV or higher, such as high-speed electrons, and thus, the nanostructure of substances can be eliminated effectively through the work of reactive species having an electron temperature of 10 eV or higher generated through plasma discharge. That is to say, a secondary active species created through excitation by an active species having an electron temperature of 10 eV or higher generated through plasma discharge contacts substances having a nanostructure, and thus, the nanostructure of the substances can be eliminated effectively. As a result, the bioinvasive reaction of substances can be reduced more effectively. For example, adjuvant substances are inactivated more effectively through the work of active species, and thus, the adjuvant effects of adjuvant substances can be reduced. As a result, allergies can be prevented effectively.

In the above described embodiment, the air (unprocessed gas) that is introduced into the circulation path is introduced into the discharge device 20 without passing through a filter or the like, so that substances having a nanostructure in the air are introduced into the discharge device 20. As a result, the substances having a nanostructure in the air contact an active species in the vicinity of the discharge device 20 in the air. Thus, substances having a nanostructure in the air can be made to contact an active species in the air, and therefore, the nanostructure of the substances in the air can be eliminated, so that the bioinvasive reaction of the substances can be reduced.

In the above described embodiment, the fan, which serves as air blowing means, helps the active species to be diffused, so that the opportunities that the active species and substances contact each other are effectively increased. As a result, the substances can be modified even at locations at a distance from the plasma discharge portion. Thus, the nanostructure of substances can be eliminated more effectively and the bioinvasive reaction of the substances can be reduced more effectively.

The above described embodiment may be modified as follows.

In the above described embodiment, a substance modifying device, which eliminates the nanostructure of substances to reduce the bioinvasive reaction of substances having a nanostructure, is described. This substance modifying device inactivates adjuvant substances by eliminating the nanostructure of the adjuvant substances and prevents allergies by reducing the adjuvant effects of the adjuvant substances and thus, functions as an allergy preventing apparatus. The substance modifying device which functions as an allergy preventing apparatus can prevent allergies by inactivating adjuvant substances and removing allergens. As described above, allergies are caused by allergens, and therefore, allergies can be prevented more effectively if allergens are removed when adjuvant substances are inactivated.

A concrete example of such a substance modifying device is described in the following. The means for removing allergens in the substance modifying device described below is merely an example, and the invention is not limited to this.

An ionizing portion and a dust collecting filter (electrostatic filter), for example, may be additionally provided in the above described substance modifying device.

The ionizing portion is provided to charge dust so that it is collected by the electrostatic filter placed downstream from the ionizing portion. The electrostatic filter is placed on a surface upstream so as to collect dust that is charged by the ionizing portion.

When air is introduced into the main casing body of the substance modifying device, air flows into the ionizing portion so that dust is positively charged through discharge between an ionizing line and an electrode facing this line. Allergens (mites, pollen and the like) are positively charged in this ionizing portion. Indoor air including such charged dust flows through the electrostatic filter. Then, the electrostatic filter collects the charged dust. That is to say, allergens are collected on this electrostatic filter.

An ionizing portion and an electrostatic filter may be arranged in combination with a discharge device as that in the above described embodiment so that removal of allergens and inactivation of adjuvant substances can be carried out simultaneously. Concretely, the ionizing portion may be placed upstream from the discharging device and the electrostatic filter may be placed on the corresponding electrode of the discharge device. In this case, an active species included in low temperature plasma generated through streamer discharge contacts the indoor air, so that harmful substances and odorous substances in the indoor air decompose. At this time, adjuvant substances decompose. In addition, positively charged allergens also decompose to a certain degree. Furthermore, positively charged allergens are collected on the electrostatic filter. Allergens may further decompose using a catalyst activated by the active species generated through streamer discharge.

In the above described embodiment, the substance modifying device may have a structure for capturing substances having a nanostructure in a place where substances having a nanostructure efficiently contact the generated active species in the air so that the substances contact the active species in the air over a relatively long period of time. A filter, for example, which can capture substances having a nanostructure may be provided downstream at a distance from the discharge device. Thus, substances having a nanostructure may be captured on the filter placed downstream, and in addition, diffusion of the active species may be helped by the means of blowing air. As a result, opportunities for the active species and substances to contact each other can be effectively increased, and substances captured on the filter placed downstream can be modified without failure before flying off again. Thus, the nanostructure can be eliminated more effectively and the bioinvasive reaction of substances having a nanostructure can be reduced more effectively.

An air conditioner provided with a substance modifying device as that in the above described embodiment may be formed. In this air conditioner, the substance modifying device may be provided with means for removing allergens. In addition, in the air conditioner, the substance modifying device may be provided with a filter or the like which can capture substances having a nanostructure downstream at a distance from the discharge device, in addition to an air blowing means. "Air conditioner" includes air cleaners and humidifiers.

### Examples

In the following, the present invention is described in further detail using examples, but the present invention is by no means limited to these examples.

### <Example 1>

In the following, an example (experiment for reducing adjuvant effects through plasma discharge) for the above described embodiment, as well as a comparative example, is described. In this experiment for reducing adjuvant effects, streamer discharge as that described above was used from among other possible types of plasma discharge.

### (Experimental Apparatus)

The experimental apparatus 30 shown in Fig. 2 was used for the experiment. The above described discharge device 20 shown in Fig. 1 was provided within this experimental apparatus 30, and the discharge electrode 21 was installed above this so that the discharge substrate 21a became approximately horizontal and the discharge ends 21b faced downward, and the opposite electrode 22 was installed below so as to face the discharge electrode 21 and become approximately horizontal. An air blowing device 31 was provided above the experimental apparatus 30, and air was blown into the experimental apparatus 30 by this air blowing device 31. The air blown into the experimental apparatus 30 passed through the discharge device 20 within the experimental apparatus 30 and blown out from the lower side of the experimental apparatus 30. This experimental apparatus 30 was operated within a chamber made of transparent acryl.

In this experimental apparatus 30, it is possible to install an experimental petri dish 35 downstream from the discharge device 20. As described below, in the present example, a petri dish 35 having dry powder of aluminum hydroxide was installed.

### (Streamer Processing of Adjuvant Substances)

**In the** present experiment for reducing adjuvant effects, dry powder of aluminum hydroxide was used as an adjuvant substance. The petri dish 35 containing this dry powder of an aluminum hydroxide gel was installed in the experimental apparatus 30 and streamer discharge was carried out for 16 hours. This streamer discharge was carried out with the voltage adjusted to 5.4 kV and the current adjusted to 5.5 µA.

### (Preparation of Sensitized Animal)

BDF1 type five week-old female mice were used as the animals for immunization. In addition, egg white albumin (OVA) was used as an allergen.

1 ml of a normal saline solution in which 20 µg of egg white albumin was dissolved was administered into the abdominal cavity for Group 1 (five mice). 1 ml of a normal saline solution in which 20 µg of egg white albumin and 2 mg of a dry powder of an aluminum hydroxide gel were dissolved was administered into the abdominal cavity for Group 2 (six mice) (comparative example). 1 ml of a normal saline solution in which 20 pg of egg white albumin and 2 mg of a dry powder of an aluminum hydroxide gel on which the above described streamer processing was carried out were dissolved was administered into the abdominal cavity for Group 3 (five mice) (example).

Administration was carried out two times for each group with an interval of two weeks.

### (Measurement of Immunity)

After additional two weeks, blood was collected and the amount of the total IgE in the serum was measured in accordance with an ELISA method. In accordance with this ELISA method, an OptEIA kit made by BD Corporation was used. In the following, the protocol is described.
(1) A capture antibody (anti-mouse IgE antibody), which was diluted to 5 µg/mL with a PBS (phosphoric acid buffer: pH 7.2), was added to a plate so that 100 µL/well was gained and left to sit for one hour at room temperature. After that, the plate was washed with a PBS-T (phosphoric acid buffer containing 0.05 % of Tween-20) three times.
(2) A blocking buffer (PBS containing 1 % of BSA) was added to a plate so that 250 µL/well was gained and left to sit for one hour at room temperature. After that, the plate was washed once with the PBS-T.
(3) Standard substances in a series where they were diluted two times thinner with the PBS (standard) and samples which were diluted to various concentrations (objects to be tested (serum)) were prepared, and 100 µL of each was added to a well and left to sit for one hour at room temperature. After that, the plates were washed with the PBS-T three times.
(4) A labeled antibody (biotin labeled anti-mouse IgE antibody) and peroxidase labeled avidin (Avidin-HRP) were respectively diluted with 2 µ/mL of the PBS and added to a plate so that 100 µL/well was gained and left to sit for one hour at room temperature. After that, the plates were washed with the PBS-T three times.
(5) A TMB (100 µL/well) was added in order for a reaction to occur for forty minutes at room temperature, and after that, a stop solution (2M hydrochloric acid) (100 µL/well) was added so that the color reaction was completed. Then, the absorbance of light with a wavelength of 450 nm was measured, and the sample was quantitated on the basis of the standard curve which was prepared by plotting the measured values of the wells to which the standard substances were added.

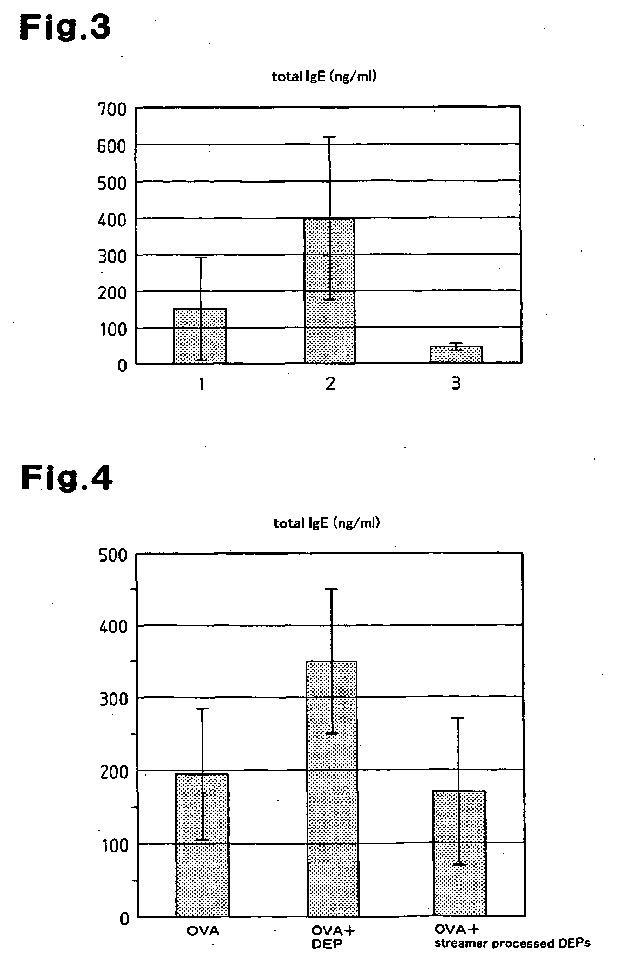

Table 1 shows the results of the experiment concerning the total concentration of IgE in the serum. The data includes the total concentration of IgE in each sample and the average and the standard deviation in each group. Fig. 3 is a graph showing the results of the experiment for each group. The data includes the average ± standard deviation for each group.

**Table 1**

| Total IgE (ng/ml) | | | |
|---|---|---|---|
| | Solely Egg White Albumin | Egg White Albumin + Aluminum Hydroxide Gel | Egg White Albumin + Streamer Processed Aluminum Hydroxide Gel |
| #1 | 100 | 216 | 54 |
| #2 | 400 | 832 | 44 |
| #3 | 50 | 336 | 32 |
| #4 | 128 | 416 | 58 |
| #5 | 80 | 288 | 38 |
| #6 | | 304 | |
| Average | 151.6 | 398.7 | 45.2 |
| Standard Deviation | 141.7 | 222.1 | 10.8 |

As shown in Table 1 and Fig. 3, it was found that the concentration of IgE in the mice which were sensitized with 20 µg of egg white albumin and 2 mg of a dry powder of an aluminum hydroxide gel in Group 2 (comparative example) was higher than that of the mice which were sensitized with only 20 µg of egg white albumin in Group 1. It was also found that the concentration of IgE in the mice which were sensitized with 20 µg of egg white albumin and 2 mg of a dry powder of an aluminum hydroxide gel on which streamer processing was carried out in Group 3 (example) was lower than the concentration of IgE in the mice of this Group 2 (comparative example). Thus, it was found that the adjuvant effects of the dry powder of the aluminum hydroxide gel were reduced in the case where streamer processing was carried out on the dry powder of the aluminum hydroxide gel.

### <Example 2>

Diesel exhaust particulates (DEP) were subjected to streamer through streamer discharge, and it was verified that the adjuvant effects of the DEPs were reduced.

The same experimental apparatus as the experimental apparatus 30 in the above described Example 1 was used. In the present example, as described below, DEPs were put in a petri dish 35 installed downstream from the discharge device 20.

### (Streamer Processing of DEPs or Adjuvant Substances)

DEPs were used in the present adjuvant effect reducing experiment as the adjuvant substances. The petri dish 35 containing DEPs was installed in the experimental apparatus 30 and streamer discharge was carried out for 16 hours. This streamer discharge was carried out with the voltage adjusted to 5.4 kV and the current adjusted to 5.5 µA.

### (Preparation of Sensitized Animal)

BDF1 type five week-old female mice (raised by CLEA Japan Inc.) were used as the animals for immunization. Egg white albumin (OVA) (made by COSMO BIO Co., Ltd.) was used as an allergen. In addition, DEPs (supplied by the National Environment Laboratory) were used as the adjuvant substances as described above.

The administered groups were the following three groups (four mice/group) where the respective mice were administered with the following through an injection into the abdominal cavity under anesthesia. In Group 1, 20 µg of egg white albumin which was dissolved in 1 ml of a normal saline solution was administered. In Group 2, 20 µg of egg white albumin and 2 mg of unprocessed DEPs which were dissolved in 1 ml of a normal saline solution were administered (comparative example). In Group 3, 20 µg of egg white albumin and 2 mg of DEPs, on which streamer processing was carried out as described above, which were dissolved in 1 ml of a normal saline solution were administered (example).

As for the immunization schedule, the mice in each group were kept for preparation for one week, and after that, the above was administered (initial immunization), and two weeks later, the above was administered for the second time (immunization) and blood was collected, and additional two weeks later, the above was administered for the third time (immunization) and blood was collected. Then, all the blood was collected two weeks later.

### (Measurement of Immunity)

After all the blood was collected as described above, the total amount of IgE in the serum was measured in accordance with an ELISA method. An OptEIA kit made by BD Corporation was used in the measurement in accordance with this ELISA method, of which the process was carried out following the protocol shown in the above Example 1.

Table 2 shows the results of the experiment on the total concentration of IgE in the serum. The data includes the total concentration of IgE in each sample and the average and the standard deviation in each group. Fig. 4 is a graph showing the results of the experiment for each group. The data includes the average ± standard deviation for each group.

**Table 2**

| Total IgE (ng/ml) | | | |
|---|---|---|---|
| | Solely Egg White Albumin | Egg White Albumin + DEP | Egg White Albumin + Streamer Processed DEP |
| #1 | 60 | 320 | 120 |
| #2 | 240 | 240 | 120 |
| #3 | 240 | 480 | 120 |
| #4 | 240 | 360 | 320 |
| Average | 195 | 350 | 170 |
| Standard Deviation | 90 | 100 | 100 |

As shown in Table 2 and Fig. 4, in the case of sensitization with egg white albumin (20 pg) and unprocessed DEPs (2 mg) in Group 2 (comparative example), the exhibited concentration of IgE was higher than that in the case of sensitization with only egg white albumin (20 µg) in Group 1. In the case of sensitization with egg white albumin (20 µg) and DEPs (2 mg) on which streamer processing was carried out in Group 3 (example), the exhibited concentration of IgE was lower than the concentration of IgE in this Group 2 (comparative example). This was approximately at the same level as in the case of Group 1. Thus, it was found that the adjuvant effects of DEPs were reduced through streamer processing.

### (Scanning Electron Micrograph Showing Elimination of Nanostructure)

Scanning electron micrographs of diesel discharge particulates (DEP) were taken before and after the above described streamer processing was carried out. These are shown in Fig. 5 (unprocessed DEP) and Fig. 6 (DEPs after streamer processing). It can be seen that the fine structure (nanostructure) forming unevenness on the surface of the DEPs, which was observed on the unprocessed DEPs in Fig. 5, was eliminated in the DEPs after streamer processing in Fig. 6. That is to say, in the DEPs after streamer processing, unevenness on the fine structure on a nanoscale was reduced and the nanostructure was eliminated.

### <Comparative Example>

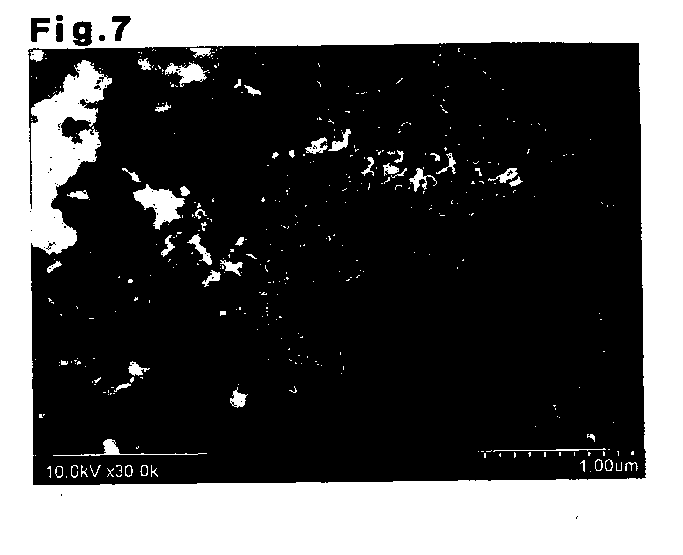

Streamer discharge was carried out (for 15 minutes) on diesel discharge particulates (DEP) directly placed on the surface of the opposite electrode 22 on the discharge electrode 21, and after the processing, a scan electron micrograph was taken. This is shown in Fig. 7. In this case, the DEPs were in a ruptured state having a finer structure than before processing. In the case where DEPs are placed on the surface of the opposite electrode 22 on the discharge electrode 21, a state where high-speed electrons having high energy directly hit these DEPs is gained. Thus, high-speed electrons having high energy directly hit the DEPs, and as a result, the DEPs ruptured, and a finer structure was gained instead of the nanostructure being eliminated.

In the above described Example 2, the DEPs were placed downstream at a distance from the discharge device 20 when streamer discharge was carried out, and therefore, high-speed electrons having high energy did not directly hit the DEPs. As a result, the DEPs in this case were affected by a secondary active species generated by the high-speed electrons which was diffused and contacted the DEPs. In this case, the nanostructure was eliminated as shown in Fig. 6.

## Claims

1. A bioinvasive reaction reducing method for reducing an bioinvasive reaction of a substance having a nanostructure, the method being **characterized in that** the substance is an adjuvant substance, wherein the adjuvant substance is made to contact an active species which is generated through plasma discharge and is diffused from between positive and negative electrodes for the plasma discharge, and thus, unevenness formed by the nanostructure is reduced in the fine structure on a nanoscale in the adjuvant substance and the nanostructure of the substance is eliminated, so that the bioinvasive reaction of the substance is reduced.

2. The bioinvasive reaction reducing method according to claim 1, **characterized in that** the plasma discharge is streamer discharge generated between a positive electrode in linear or needle form and a negative electrode in plane form.

3. The bioinvasive reaction reducing method according to claim 1 or 2, **characterized in that** the substance is made to contact a secondary active species which is excited by an active species having an electron temperature of 10 eV or higher generated through the plasma discharge.

## Patentansprüche

1. Verfahren zur Verringerung einer bioinvasiven Reaktion zum Reduzieren einer bioinvasiven Reaktion einer Substanz mit einer Nanostruktur, wobei das Verfahren **dadurch gekennzeichnet ist, dass** die Substanz ein Adjuvans ist, wobei das Adjuvans zum Kontaktieren einer aktiven Spezies hergestellt wird, die durch Plasmaentladung erzeugt wird, und zwischen der positiven und negativen Elektrode für die Plasmaentladung diffundiert und wodurch Unebenheiten, die durch die Nanostruktur gebildet sind, in der Feinstruktur im Nanomaßstab im Adjuvans verringert und die Nanostruktur der Substanz beseitigt wird, so dass die bioinvasive Reaktion der Substanz reduziert ist.

2. Verfahren zur Verringerung der bioinvasiven Reaktion nach Anspruch 1, **dadurch gekennzeichnet, dass** die Plasmaentladung eine Streamerentladung ist, die zwischen einer positiven Elektrode in linearer oder Nadelform und einer negativen Elektrode in planarer Form erzeugt wird.

3. Verfahren zur Verringerung der bioinvasiven Reaktion nach Anspruch 1 oder 2, **dadurch gekennzeichnet, dass** die Substanz hergestellt ist, um eine zweite aktive Spezies zu kontaktieren, die durch eine aktive Spezies mit einer Elektronentemperatur von 10 eV oder höher, die durch die Plasmaentladung erzeugt wird, angeregt wird.

## Revendications

1. Procédé de réduction par réaction bioinvasive destiné à la réduction d'une réaction bioinvasive d'une substance comportant une nanostructure, le procédé étant **caractérisé en ce que** la substance est une substance adjuvante, dans lequel la substance adjuvante est portée en contact avec une espèce active qui est générée par une décharge de plasma et qui est diffusée entre des électrodes positives et négatives pour la décharge de plasma, et de ce fait, l'irrégularité formée par la nanostructure est réduite dans la fine structure sur une nanoéchelle dans la substance adjuvante et la nanostructure de la substance est éliminée de manière à ce que la réaction bioinvasive soit réduite.

2. Procédé de réduction par réaction bioinvasive selon la revendication 1, **caractérisée en ce que** la décharge de plasma est une décharge en continu générée entre une électrode positive de forme linéaire ou en forme d'aiguille et une électrode négative de forme planaire.

3. Procédé de réduction par réaction bioinvasive selon la revendication 1 ou 2, **caractérisé en ce que** la substance est portée en contact avec une espèce active secondaire qui est excitée par une espèce active ayant une température d'électron de 10 eV ou supérieure générée par le biais d'une décharge de plasma.
